# EUROPEAN PATENT SPECIFICATION

(11) **EP 4 209 381 B1**
(45) Date of publication and mention of the grant of the patent: **17.04.2024**
(21) Application number: 22150993.8
(22) Date of filing: 11.01.2022
(51) Int. Cl.: B60L 3/06, B60L 15/10, B60L 50/60, B60L 3/00

(54) **ELECTRICALLY DRIVEN CONSTRUCTION MACHINE AND ASSOCIATED CONTROL**
ELEKTRISCH ANGETRIEBENE BAUMASCHINE UND ZUGEHÖRIGE STEUERUNG
MACHINE DE CONSTRUCTION AVEC PROPULSION ÉLECTRIQUE ET COMMANDE ASSOCIÉE

(43) Date of publication of application: 12.07.2023
(73) Proprietor: Birkerod Holding ApS, 1054 Copenhagen K (DK)
(72) Inventor: BENTZEN, Anders, 7160 Tørring (DK); MADSEN, Jens Jørgen, 5220 Odense SØ (DK); MADSEN, Nikolaj Birkerod, 1054 Copenhagen K (DK)
(74) Representative: COPA Copenhagen Patents

(56) References cited:
- WO-A1-2022/005372
- DE-A1-102014 213 865
- US-A1- 2013 214 928
- US-A1- 2014 339 891
- US-A1- 2021 276 423

## Description

The present disclosure relates to an electric machine, such as an electric construction machine, more particularly to an electric construction machine for use in building, in construction, in agriculture, in roadworks, in landscaping or similar. The present disclosure is also related to the control of such electric construction machine.

### BACKGROUND

In situations involving handling and/or transportation of heavy materials or involving transportation of a significant amount of material, it is considered of great advantage to make use of motorized equipment for facilitating such transportation and handling. For example, it is known to use vehicles such as trucks or loaders (wheeled and/or with continuous tracks, also known as crawlers). However, in some situations, such vehicles are too big, for example, in cases where material is to be moved inside a house, in a domestic garden, or similar. In such situations, it may be beneficial to use a conventional wheelbarrow, which is easy to transport and relatively easy to handle in confined areas. Motorized wheelbarrows and mini dumpers have been proposed, which until now have primarily been driven by internal combustion engines. Similarly larger construction machines are also primarily driven by internal combustion engines.

In an effort to move away from using fossil fuels, it has generally become of increasing interest to utilize electric motors and batteries to perform the tasks previously done by internal combustion engines. However, substituting an internal combustion engine with an electric motor and batteries are not without challenges, and the present disclosure aims to address at least some of the challenges in making an electric construction machine.

Particularly, it is a challenge that loads of construction machines vary quite significantly, and that, in some cases, such machines may unintentionally be loaded close to or above their intended maximum. Furthermore, for some construction machines, the payload may supersede the weight of the construction machine itself. When combining such high loads with operation in a rough terrain which is very common for construction machines, it is not uncommon that such machines are operated close to or even beyond their intended limits.

As an example of the prior art US 2013/214928 A1 shows overload management in a construction machine.

### SUMMARY

It is an object of the present disclosure to at least provide improvements of the prior art and/or to solve or reduce problems known from the prior art.

It is a further object of the present disclosure to provide an electric machine, such as an electric construction machine and control of such electric machine.

Thus, the present disclosure relates to a construction machine, such as a moveable machine that transports, lifts or works with elements that require strong use of power. For example, the construction machine of the present disclosure may be a mini dumper, a dumper, a front loader, a motorised wheelbarrow, a tractor, an excavator, a backhoe, etc. The construction machine of the present disclosure may be a smaller type of construction machine. For example, of a type with a maximum propulsion speed of less than 50 km/h, such as less than 25 km/h, such as less than 10 km/h, such as 6 km/h. Furthermore, the construction machine of the present disclosure may be of a type with a dead weight of less than 10,000 kg, such as less than 4,500 kg.

Accordingly, a construction machine is disclosed having a body, at least one electric motor, one or more batteries, such as rechargeable batteries, adapted to power the at least one electric motor, and a control circuit. The one or more batteries may be lithium-ion (Li-ion) batteries. However, other batteries, such as rechargeable batteries, known in the art may also be used. The one or more batteries may comprise parallel coupled batteries and/or serially coupled batteries. The one or more batteries may supply a voltage of less than 100V, such as less than 75V, such as less than 50V, such as less than 25V. The at least one electric motor may be adapted to operate at a voltage corresponding to the voltage supplied by the one or more batteries, such as at a voltage of less than 100V, such as less than 75V, such as less than 50V, such as less than 25V.

The construction machine may comprise a control panel comprising one or more controllers. The control panel may be physically coupled to the body of the construction machine. Alternatively, the control panel may be a remote control panel, such as to allow remote control of the construction machine.

The construction machine may comprise one or more movement elements, e.g., wheels and/or continuous tracks, and a propulsion electric motor adapted to drive the one or more movement elements. The at least one electric motor of the construction machine may include the propulsion electric motor. The one or more batteries, such as one or more propulsion batteries, e.g., of the one or more batteries, may be adapted to power the propulsion electric motor. The one or more propulsion batteries may comprise parallel coupled batteries and/or serially coupled batteries. The one or more propulsion batteries may supply a propulsion voltage. The propulsion voltage may be less than 100V, such as less than 75V, such as less than 50V, such as less than 25V. The propulsion electric motor may be adapted to operate at the propulsion voltage. In some examples, the construction machine may comprise a plurality of propulsion electric motors, e.g., adapted to drive individual movement elements of the one or more movement elements.

The control circuit may be adapted to operate the propulsion electric motor in accordance with a propulsion variable. In some examples, the construction machine may be self-driving. Hence, for example, the propulsion variable may be based on a pre-programmed scheme of movement. In other examples, the propulsion variable may be based on an input from a user operable controller. The control panel may comprise a propulsion controller operable between a lower propulsion controller limit and an upper propulsion controller limit. The control circuit may be adapted to receive a propulsion controller input indicative of a state of the propulsion controller between the lower propulsion controller limit and the upper propulsion controller limit, and to operate the propulsion electric motor in accordance with a propulsion variable based on the propulsion controller input.

While operating the propulsion electric motor in accordance with the propulsion variable, the control circuit may be further adapted to receive a propulsion current signal indicative of an amount of current drawn by the propulsion electric motor, and in accordance with the propulsion current signal satisfying propulsion reduction criteria, reduce the propulsion variable by a propulsion reduction amount, e.g., such that the propulsion variable is below a maximum propulsion variable.

The construction machine may comprise a functional component, e.g., a skip, a shovel, a bucket, a blade or similar, movable between a first component position and a second component position, and a component electric motor adapted to move the functional component between the first component position and the second component position. The at least one electric motor of the construction machine may include the component electric motor. In some examples, the component electric motor and the propulsion electric motor may be the same. Alternatively, the component electric motor and the propulsion electric motor may be different electric motors. The one or more batteries, such as one or more component batteries, e.g., of the one or more batteries, may be adapted to power the component electric motor. In some examples, the one or more propulsion batteries and the one or more component batteries may be different batteries, e.g., of the one or more batteries. The one or more component batteries may comprise parallel coupled batteries and/or serially coupled batteries. The one or more component batteries may supply a component voltage. The component voltage may be less than 100V, such as less than 75V, such as less than 50V, such as less than 25V. The component electric motor may be adapted to operate at the component voltage. The control circuit may be adapted to operate the component electric motor in accordance with a component movement variable. In some examples, the construction machine may be self-operating, e.g., in combination with it being self-driving. Hence, for example, the component movement variable may be based on a pre-programmed scheme of movement. In other examples, the component movement variable may be based on an input from a user operable controller.

The control panel may comprise a component controller operable between a lower component controller limit and an upper component controller limit. The control circuit may be adapted to receive a component controller input indicative of a state of the component controller between the lower component controller limit and the upper component controller limit, and to operate the component electric motor in accordance with a component movement variable based on the component controller input.

While operating the component electric motor in accordance with the component movement variable, the control circuit may be further adapted to: receive a component current signal indicative of an amount of current drawn by the component electric motor, and in accordance with the component current signal satisfying component reduction criteria, reduce the component movement variable by a component reduction amount, e.g., such that the component movement variable is below a maximum component movement variable.

The present inventors have found that an electrically driven construction machine may be subject to loads resulting in excessive current being drawn from the batteries for prolonged period of times. It is further realised that batteries, particularly lithium-ion batteries, may be damaged (in some cases permanently) by drawing too much current for a prolonged period of time. Furthermore, also other components of the construction machines may be harmed by excessive currents.

The present disclosure provides the advantage that overloading and resulting potential damaging of the batteries, as well as other components, may be prevented or at least reduced. Thus, by implementing the disclosed control method, the risk of damaging the batteries may be decreased, leading to increased durability of the construction machine.

Furthermore, the presently disclosed control method reduces the need for providing more expensive solutions, such as a gear transmission system.

The propulsion reduction criteria may include an upper propulsion current threshold and/or an upper propulsion threshold duration of time. To satisfy the propulsion reduction criteria, the propulsion current signal may be indicative of the propulsion electric motor having drawn an amount of current above the upper propulsion current threshold, e.g. for a period of time longer than the upper propulsion threshold duration of time.

The component reduction criteria may include an upper component current threshold and/or an upper component threshold duration of time. To satisfy the component reduction criteria, the component current signal may be indicative of the component electric motor having drawn an amount of current above the upper component current threshold, e.g. for a period of time longer than the upper component threshold duration of time.

The upper propulsion current threshold and/or the upper component current threshold may be between 50-1000 ampere, such as between 50-500 ampere, such as between 50-300 ampere, such as between 80-200 ampere, such as between 100-150 ampere, such as between 110-130 ampere. The upper propulsion current threshold and/or the upper component current threshold may be based on the number of parallel coupled batteries of the one or more propulsion batteries or component batteries, respectively. For example, the upper propulsion current threshold may be between 50-1000 ampere, such as between 50-500 ampere, such as between 50-300 ampere, such as between 80-200 ampere, such as between 100-150 ampere, such as between 110-130 ampere per parallel coupled propulsion batteries. Similarly, the upper component current threshold may be between 50-1000 ampere, such as between 50-500 ampere, such as between 50-300 ampere, such as between 80-200 ampere, such as between 100-150 ampere, such as between 110-130 ampere per parallel coupled component batteries. The upper propulsion threshold duration of time and/or the upper component threshold duration of time may be between 1 and 10 seconds, such as between 3 and 8 seconds, such as between 4 and 6 seconds, such as 5 seconds.

The propulsion controller may be operable between a lower propulsion controller limit and an upper propulsion controller limit. The propulsion controller may be realised as a potentiometer, but other means known in the art may equally be used. The lower propulsion controller limit may correspond to a standstill of the construction machine, i.e., no movement of the movement elements. The upper propulsion controller limit may correspond to maximum (forward or rearward) propulsion speed of the construction machine, i.e., maximum rotational speed of the movement elements. A state of the propulsion controller between the lower propulsion controller limit and the upper propulsion controller limit may be linearly proportional to a corresponding propulsion speed of the construction machine, e.g., the propulsion controller at a 30% position between the lower propulsion controller limit and the upper propulsion controller limit may correspond to a propulsion speed of 30% of the maximum propulsion speed. The maximum propulsion speed of the construction machine caused by the one or more movement elements may be less than 50 km/h, such as less than 25 km/h, such as less than 10 km/h, such as 6 km/h. The maximum propulsion speed may correspond to a maximum rotational speed of the one or more movement elements, which again may correspond to a maximum rotational speed of the rotor of the propulsion electric motor. The propulsion electric motor, such as the rotor of the propulsion electric motor, may be connected to the one or more movement elements, such as an axle of the one or more movement elements, by a gear with a gear ratio. The gear may be a reduction gear. The gear ratio may be between 2:1-20:1, such as between 4:1-15:1, such as between 5:1-10:1, such as 8:1.

The control circuit may receive the propulsion controller input, e.g., from the propulsion controller. The propulsion controller input may be indicative of the state of the propulsion controller. For example, the propulsion controller input may be a voltage signal between 0-5V, where 5V is indicative of the propulsion controller being at the upper propulsion controller limit and 0V being indicative of the propulsion controller being at the lower propulsion controller limit. However, the propulsion controller input may be realised differently, as known in the art, such as e.g., PWM signals etc.

The control circuit may determine the propulsion variable based on the propulsion controller input. As also explained herein, the propulsion variable may be further adjusted based on the propulsion current signal. The propulsion variable may be transmitted to the propulsion electric motor. The propulsion variable may be transmitted as a PWM signal, or as another signal known in the art. The propulsion variable may be indicative of a wanted rotational speed of the propulsion electric motor, such as of the rotor of the propulsion electric motor.

As mentioned previously, while operating the propulsion electric motor in accordance with the propulsion variable, the control circuit may be further adapted to receive the propulsion current signal, and in accordance with the propulsion current signal satisfying propulsion reduction criteria, reduce the propulsion variable by a propulsion reduction amount, e.g., such that the propulsion variable is below a maximum propulsion variable. The maximum propulsion variable may correspond to the propulsion variable based on the propulsion controller input, without it being adjusted based on the propulsion current signal.

The propulsion reduction amount may be between 30-60%, such as between 40-55%, such as 50% of the propulsion variable and/or of the maximum propulsion variable. Alternatively, the propulsion reduction amount may correspond to a fixed speed of the propulsion electric motor, such as between 100-1000 rpm, such as between 500-900 rpm. The propulsion reduction amount may correspond to a fixed propulsion speed of the construction machine, such as between 2-25 km/h of the construction machine, such as between 2-5 km/h, such as 3 km/h or such as between 5-20 km/h, such as 10 km/h, of the construction machine.

The propulsion current signal may be a root mean square of the current drawn by the propulsion electric motor, e.g., over a time period, e.g., of 0.5 seconds or 1 second or 2 seconds. The propulsion current signal may be acquired from the propulsion electric motor. Alternatively, a current sensor may be provided between the one or more batteries and the propulsion electric motor, and the control circuit may receive the propulsion current signal from the current sensor.

The component controller may be operable between a lower component controller limit and an upper component controller limit. The component controller may be realised as a potentiometer, but other means known in the art may equally be used. The lower component controller limit may correspond to a standstill of the functional component, i.e., no movement of the functional component. The upper component controller limit may correspond to maximum speed of movement of the functional component. A state of the component controller between the lower component controller limit and the upper component controller limit may linearly correspond to a corresponding speed of movement of the functional component, e.g., the component controller being at a 30% position between the lower component controller limit and the upper component controller limit may correspond to a speed of movement of the functional component of 30% of the maximum speed.

The control circuit may receive the component controller input, e.g., from the component controller. The component controller input may be indicative of the state of the component controller. For example, the component controller input may be a voltage signal between 0-5V, where 5V is indicative of the component controller being at the upper component controller limit and 0V being indicative of the component controller being at the lower component controller limit. However, the component controller input may be realised differently, as known in the art.

The control circuit may determine the component movement variable based on the component controller input. As also explained herein, the component movement variable may be further adjusted based on the component current signal. The component movement variable may be transmitted to the component electric motor. The component movement variable may be transmitted as a PWM signal, or as another signal known in the art. The component movement variable may be indicative of a wanted speed (e.g., rotational speed) of the component electric motor, such as of a rotor of the component electric motor.

As mentioned previously, while operating the component electric motor in accordance with the component movement variable, the control circuit may be further adapted to receive the component current signal, and in accordance with the component current signal satisfying component reduction criteria, reduce the component movement variable by a component reduction amount, e.g., such that the component movement variable is below a maximum component movement variable. The maximum component movement variable may correspond to the component movement variable based on the component controller input, without it being adjusted based on the component current signal.

The component reduction amount may be between 30-60%, such as between 40-55%, such as 50% of the component movement variable and/or of the maximum component movement variable. Alternatively, the component reduction amount may correspond to a fixed speed of the component electric motor, such as between 100-1000 rpm, such as between 500-900 rpm.

The component current signal may be a root mean square of the current drawn by the component electric motor, e.g., over a time period, e.g., of 0.5 seconds or 1 second or 2 seconds. The component current signal may be acquired from the component electric motor. Alternatively, a current sensor may be provided between the one or more batteries and the component electric motor, and the control circuit may receive the component current signal from the current sensor.

While operating the propulsion electric motor in accordance with the propulsion variable and while the propulsion variable is below the maximum propulsion variable, the control circuit may be further adapted to, in accordance with the propulsion current signal satisfying a propulsion increasing criteria, increase the propulsion variable by a propulsion increase amount. Similarly, while operating the component electric motor in accordance with the component movement variable and while the component movement variable is below the maximum component movement variable, the control circuit may be further adapted to, in accordance with the component current signal satisfying a component increasing criteria, increase the component movement variable by a propulsion increase amount.

The propulsion increasing criteria may include a lower propulsion current threshold and optionally a lower propulsion threshold duration of time. To satisfy the propulsion increasing criteria, the propulsion current signal may be indicative of the propulsion electric motor having drawn an amount of current below the lower propulsion current threshold, e.g., for a period of time longer than the lower propulsion threshold duration of time. Similarly, the component increasing criteria may include a lower component current threshold and optionally a lower component threshold duration of time. To satisfy the component increasing criteria, the component current signal may be indicative of the component electric motor having drawn an amount of current below the lower component current threshold, e.g., for a period of time longer than the lower component threshold duration of time.

By implementing the propulsion increasing criteria and/or the component propulsion criteria, the propulsion variable and/or the component movement variable may be increased up to what they were before being adjusted based on the respective current signal, when the current signal is indicative of the electric motor no longer drawing excessive current at normal speed.

The lower propulsion current threshold may be lower than the upper propulsion current threshold. The lower component current threshold may be lower than the upper component current threshold. Thereby, it may be less likely that reduction is not initiated immediately again after increasing the propulsion variable and/or the component movement variable. The lower propulsion current threshold and/or the lower component current threshold may be between 30-150 ampere, such as between 50-120 ampere, such as between 70-100 ampere, such as between 80-90 ampere. The lower propulsion threshold duration of time may be lower than the upper propulsion threshold duration of time. The lower component threshold duration of time may be lower than the upper component threshold duration of time. The lower propulsion threshold duration of time and/or the lower component threshold duration of time may be between 1 and 10 seconds, such as between 3 and 8 seconds, such as between 4 and 6 seconds, such as 5 seconds.

The propulsion increase amount may be less than the propulsion reduction amount, and/or the component increase amount may be less than the component reduction amount. Thereby, the reduction may significantly reduce the current drawn, e.g., to ensure protection of the batteries, while subsequent increasing may be provided in smaller increments to approach the limit while preventing excessive current being drawn.

The propulsion increase amount may be between 5-40%, such as between 10-20%, such as 25% of the propulsion variable and/or of the maximum propulsion variable. Alternatively, the propulsion increase amount may correspond to a fixed speed of the propulsion electric motor, such as between 50-500 rpm, such as between 100-300 rpm. The component increase amount may be between 5-40%, such as between 10-20%, such as 25% of the component movement variable and/or of the maximum component movement variable. Alternatively, the component increase amount may correspond to a fixed speed of the component electric motor, such as between 50-500 rpm, such as between 100-300 rpm.

The propulsion electric motor may be an asynchronous electric motor, such as a three-phase electric motor. Alternatively, the propulsion electric motor may be a direct current electric motor. The component electric motor may be an asynchronous electric motor, such as a three-phase electric motor. Alternatively, the component electric motor may be a direct current electric motor. The component electric motor may form part of a linear actuator. The component electric motor may drive a pump of a hydraulic actuator.

A current limiter may be arranged to limit current to the propulsion electric motor and/or to the component electric motor by a maximum current limit specific to the current limiter. The maximum current limit may be more than the upper propulsion current threshold of the propulsion reduction criteria, such as more than 150% of the upper propulsion current threshold, such as more than 200% of the upper propulsion current threshold. The maximum current limit may be more than the upper component current threshold of the component reduction criteria, such as more than 150% of the upper component current threshold, such as more than 200% of the upper component current threshold. The maximum current limit may be between 150-300 ampere, such as between 200-250 ampere.

The functional component may be rotatably attached to the body. For example, the functional component may be a skip rotatably attached to the body, e.g., such as to unload the contents of the skip. Between the first component position and the second component position, the functional component may be rotated, e.g., relative to the body, by more than 45 degrees, such as more than 60 degrees, such as more than 80 degrees, such as more than 90 degrees.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Figs. 1a-1b, and 2a-2b schematically illustrate exemplary construction machines,
Fig. 3 schematically illustrates an exemplary construction machine,
Fig. 4 schematically illustrates part of an exemplary construction machine,
Fig. 5 is a block diagram illustrating an exemplary control of an electric motor of an exemplary construction machine,
Fig. 6 is a flow chart schematically illustrating logic of controlling the electric motor,
Fig. 7 is an example of current drawn by an electric motor, and
Fig. 8 is an example of current drawn by an electric motor.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

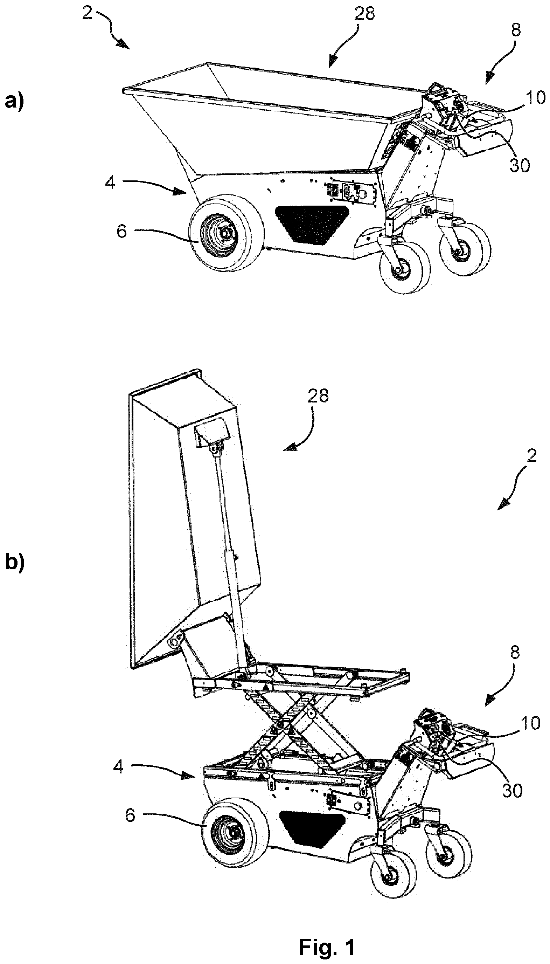

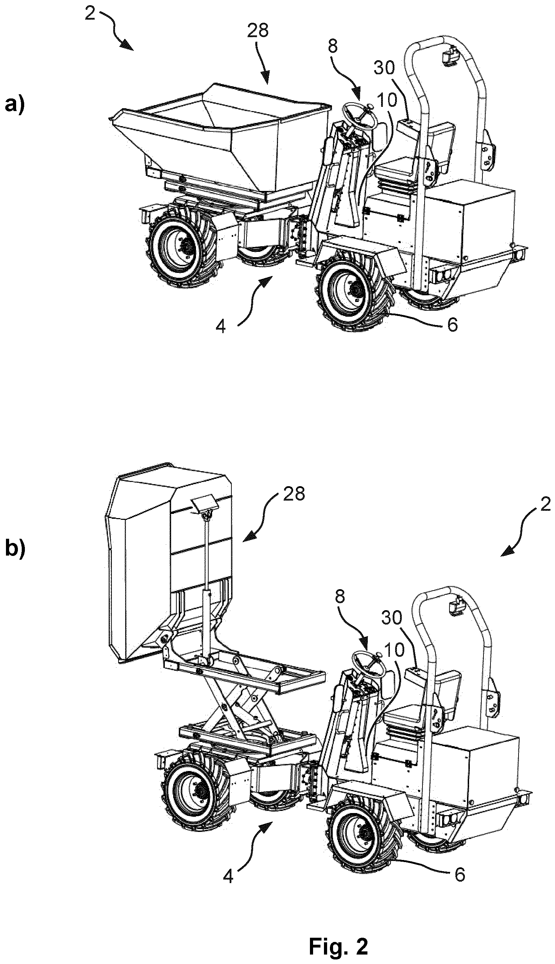

Figs. 1a-1b, and 2a-2b schematically illustrate exemplary construction machines 2. In the example of Figs. 1a and 1b, the construction machine 2 is a motorised wheelbarrow or mini dumper. In the example of Figs. 2a and 2b, the construction machine 2 is a dumper. The construction machine 2 has a body 4 and movement elements 6, which in the illustrated examples are wheels. However, other movement elements, known in the art, e.g., continuous tracks, may alternatively be used.

The construction machine 2 may further comprise a functional component 28, which in the presently illustrated examples is a skip. However, in other exemplary construction machines, the functional component may be a shovel, a bucket, a blade or other functional components known in the art. The functional component 28 may be movable between a first component position, as illustrated in Figs. 1a and 2a, and a second component position, as illustrated in Figs. 1b and 2b.

The construction machine 2 further has a control panel 8, which allows an operator to control the construction machine 2. For example, the operator may control propulsion by the movement elements 6 of the construction machine or control the functional component 28.

The control panel 8 may comprise a propulsion controller 10. The propulsion controller 10 may, for example, be a pedal, as illustrated in Figs 2a and 2b, or a handle, as illustrated in Figs. 1a and 1b. The propulsion controller 10 allows the operator to control the movement of the construction machine 2 and may allow the operator to initiate forward as well as rearward movement of the construction machine 2. The propulsion controller 10 may be operable between a lower propulsion controller limit and an upper propulsion controller limit. For example, the lower propulsion controller limit may correspond to standstill of the movement elements 6, and the upper propulsion controller limit may correspond to maximum movement of the movement elements 6, e.g., corresponding to maximum forward movement of the construction machine.

The control panel 8 may comprise a component controller 30. The component controller 30 may, for example, be a pedal or a handle, as illustrated in the present examples. The component controller 30 allows the operator to control the movement of the functional component 28, e.g., the component controller 30 may allow the operator to initiate lifting as well as lowering of the functional component 28. The component controller 30 may be operable between a lower component controller limit and an upper component controller limit. For example, the lower component controller limit may correspond to standstill of the functional component 28, and the upper component controller limit may correspond to maximum movement of the functional component 28.

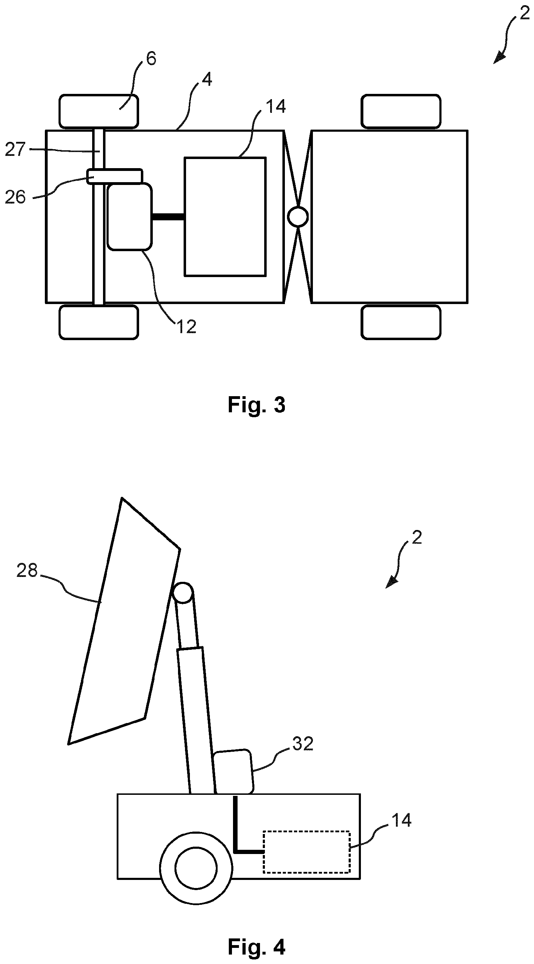

Fig. 3 schematically illustrates an exemplary construction machine 2, which may be one of the construction machines 2 as described in relation to Figs. 1-2. The construction machine 2 comprises a propulsion electric motor 12 adapted to drive the movement elements 6. The propulsion electric motor 6 may, for example, be a direct current electric motor, or be an asynchronous electric motor, such as a three-phase electric motor.

The construction machine 2 may, as illustrated, comprise a gear 26 connecting the propulsion electric motor 12, e.g., a rotor (not visible) of the propulsion electric motor 12, to an axle 27 of the movement element 6. In an alternative example, the propulsion electric motor 12 may be directly coupled to the axle 27 or to the movement element 6.

The construction machine 2 comprises a battery 14. In some examples, the construction machine 2 may comprise a plurality of batteries. The battery 14 is adapted to power the propulsion electric motor 12. When convenient, the operator may charge the battery 14 of the construction machine 2 from a charging point, e.g., a domestic power socket.

Fig. 4 schematically illustrates part of an exemplary construction machine 2, which may be one of the construction machines 2 as described in relation to Figs. 1-2, and/or may be combined with the construction machine 2 as described in relation to Fig. 3. The construction machine 2 comprises a component electric motor 32 adapted to move the functional component 28, e.g., between a first component position and a second component position, as further described in relation to Figs. 1-2. The component electric motor 32 may, for example, be a direct current electric motor, or be an asynchronous electric motor, such as a three-phase electric motor. The component electric motor 32 may form part of a linear actuator to control the movement of the function component 28.

The component electric motor 32 may be powered by a battery 14, which may be a battery designated for the component electric motor 32. However, alternatively, the battery 14 for powering the component electric motor 32 may be the same battery 14 as also used for powering a propulsion electric motor 12 as described in relation to Fig. 3.

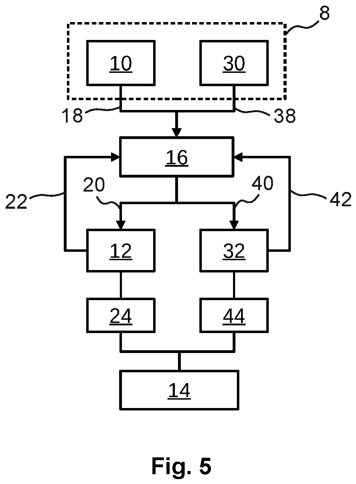

Fig. 5 is a block diagram illustrating an exemplary control of an electric motor of an exemplary construction machine 2 as described in relation to the previous figures. For example, the block diagram illustrates exemplary control of the propulsion electric motor 12 and the component electric motor 32, as described in relation to previous figures. Although the present diagram shows control of both the propulsion electric motor 12 and the component electric motor 32, it will be realised that they are not mutually dependent, i.e., one may be implemented without the other.

As mentioned previously, the construction machine 2 comprises a control panel 8 with a propulsion controller 10 and/or a component controller 30. Furthermore, the construction machine 2 comprises a control circuit 16.

The control circuit 16 is adapted to receive a propulsion controller input 18 indicative of a state of the propulsion controller 10 between the lower propulsion controller limit and the upper propulsion controller limit. The control circuit 16 is further configured to operate the propulsion electric motor 12 in accordance with a propulsion variable 20. The propulsion variable 20 is based on the propulsion controller input 18. The control circuit 16 determines the propulsion variable 20 based on the propulsion controller input 18.

Depending on the weight of the payload of the construction machine 2 and/or on obstacles, such as inclines, the construction machines have to overcome, the propulsion electric motor 12 will draw more current to obtain the speed corresponding to the state of the propulsion controller 10. For example, if full speed ahead of the propulsion controller 10 is associated with a speed of the propulsion electric motor 12 corresponding to a speed of the construction machine 2 of 6 km/h, more current will be drawn by the propulsion electric motor 12 if the construction machine 2 needs to travel uphill than downhill or if the construction machine 2 is loaded with 1000 kg. than if not loaded. As batteries may be damaged if too much current is drawn for a prolonged period of time, protective measures should be provided. One such measure is proposed herein.

The control circuit 16 is adapted to receive a propulsion current signal 22. The propulsion current signal 22 is indicative of the amount of current drawn by the propulsion electric motor 12, e.g., as a root mean square of the current drawn, e.g., over a time period, e.g., of 0.5 seconds or 1 second or 2 seconds or 5 seconds. The propulsion current signal may be acquired from the propulsion electric motor 12, as illustrated. Alternatively, a dedicated current sensor may be provided between the battery 14 and the propulsion electric motor 12 to provide the propulsion current signal 22.

While operating the propulsion electric motor 12 in accordance with the propulsion variable 20, the control circuit 16 is further adapted to adjust the propulsion variable 20 in response to the propulsion current signal. For example, the control circuit 16 may, in accordance with the propulsion current signal 22 satisfying propulsion reduction criteria, reduce the propulsion variable 20 by a propulsion reduction amount, such that the propulsion variable 20 is below a maximum propulsion variable. The maximum propulsion variable may be the propulsion variable normally associated with the state of the propulsion controller 10. Thus, the control circuit 16 may deliberately reduce the speed of the propulsion electric motor 12 below the speed normally associated with the state of the propulsion controller 10, if the propulsion current signal 22 satisfies the propulsion reduction criteria.

The propulsion reduction criteria may include an upper propulsion current threshold and an upper propulsion threshold duration of time. Thereby, the propulsion electric motor 12 may be allowed to draw a high amount of current for a short period of time, which may be sufficient to overcome a minor obstacle causing the propulsion electric motor 12 to draw a high amount of current. However, if the propulsion electric motor 12 draws a high amount of current for a longer period of time, the control circuit 16 reduces the propulsion variable 20. Thereby, the battery is protected, while still allowing the task to be performed, although at a slower pace.

While operating the propulsion electric motor 12 in accordance with the propulsion variable 20 and while the propulsion variable is below the maximum propulsion variable (e.g., due to the reduction criteria having been satisfied), the control circuit 16 is further adapted to, in accordance with the propulsion current signal 22 satisfying a propulsion increasing criteria, increase the propulsion variable 20 by a propulsion increase amount. For example, when the current drawn by the propulsion electric motor 12 is again below a certain level, after having been too high for too long, the control circuit 16 may increase the propulsion variable to achieve the maximum propulsion variable corresponding to the state of the propulsion controller 10.

The propulsion increasing criteria may include a lower propulsion current threshold and a lower propulsion threshold duration of time. Thereby, it is more certain that the propulsion electric motor 12 steadily draws current below the respective threshold.

The propulsion increase amount may be different than the propulsion reduction amount. For example, the propulsion increase amount may be less than the propulsion reduction amount. Thereby, the increase in speed may be gradually increased to reduce the risk of having to immediately again reduce the speed due to too excessive current being drawn.

Alternatively or additionally, the control circuit 16 is adapted to receive a component controller input 38 indicative of a state of the component controller 30 between the lower component controller limit and the upper component controller limit. The control circuit 16 is further adapted to operate the component electric motor 32 in accordance with a component movement variable 40. The component movement variable 40 is based on the component controller input 38. The control circuit 16 determines the component movement variable 40 based on the component controller input 38.

As with the propulsion electric motor, described above, depending on the weight of the payload of the construction machine 2, the component electric motor 32 will draw more current to obtain a movement speed of the functional component 28 corresponding to the state of the component controller 30, and as batteries may be damaged if too much current is drawn for a prolonged period of time, protective measures may similarly be applied to a motor, such as the component electric motor 32, for movement of a functional component 28 of the construction machine 2.

The control circuit 16 is adapted to receive a component current signal 42. The component current signal 42 is indicative of the amount of current drawn by the component electric motor 32, e.g., as a root mean square of the current drawn, e.g., over a time period, e.g., of 0.5 seconds or 1 second or 2 seconds. The component current signal may be acquired from the component electric motor 32, as illustrated. Alternatively, a dedicated current sensor may be provided between the battery 14 and the component electric motor 32 to provide the component current signal 42.

While operating the component electric motor 32 in accordance with the component movement variable 40, the control circuit 16 is further adapted to adjust the component movement variable 40 in response to the component current signal 42. For example, the control circuit 16 may, in accordance with the component current signal 42 satisfying component reduction criteria, reduce the component variable 40 by a component reduction amount, such that the component movement variable 40 is below a maximum component movement variable. The maximum component movement variable may be the component movement variable normally associated with the state of the component controller 30. Thus, the control circuit 16 may deliberately reduce the speed of the component electric motor 32 below the speed normally associated with the state of the component controller 30, if the component current signal 42 satisfies the component reduction criteria. The component reduction criteria may include an upper component current threshold and an upper component threshold duration of time. For example, if the component electric motor 32 draws a high amount of current for a longer period of time, the control circuit 16 reduces the component movement variable 40, which may result in slower lifting of a skip or a shovel. Thereby, the battery is protected, while still allowing the task to be performed, although at a slower pace.

While operating the component electric motor 32 in accordance with the component movement variable 40 and while the component movement variable 40 is below the maximum component movement variable (e.g., due to the component reduction criteria having been satisfied), the control circuit 16 is further adapted to, in accordance with the component current signal 42 satisfying a component increasing criteria, increase the component movement variable 40 by a component increase amount. For example, when the current drawn by the component electric motor 32 is again below a certain level, after having been too high for too long, the control circuit 16 may increase the component movement variable 40 to achieve the maximum component movement variable corresponding to the state of the component controller 30.

The component increasing criteria may include a lower component current threshold and a lower component threshold duration of time. Thereby, it is more certain that the component electric motor 32 steadily draws current below the respective threshold.

The component increase amount may be different than the component reduction amount. For example, the component increase amount may be less than the component reduction amount. Thereby, the increase in speed may be gradually increased to reduce the risk of having to immediately again reduce the speed due to too excessive current being drawn.

A current limiter 24 may be arranged to limit current to the propulsion electric motor by a maximum current limit. The current limiter 24 may completely prevent current above the maximum current limit to flow from the battery 14 and the propulsion electric motor 12. The maximum current limit imposed by the current limiter 24 may be higher than the upper propulsion current threshold of the propulsion reduction criteria. Thereby, current above the maximum current limit is prevented, while current above the upper propulsion current threshold may be allowed for shorter periods of time before protective measures, involving reducing the speed of the propulsion electric motor 12, are initiated.

Similarly, a current limiter 44 may additionally or alternatively be arranged to limit current to the component electric motor by a maximum current limit. The maximum current limit of the current limiter 24 and the current limiter 44 need not be the same but may be.

In Fig. 5, the same control circuit 16 is shown to control both the propulsion electric motor 12 and the component electric motor 32. However, alternatively, separate control circuits may be provided to control each of the propulsion electric motor 12 and the component electric motor 32. Similarly, Fig. 5 also illustrates the same battery supplying power to both the propulsion electric motor 12 and the component electric motor 32. However, it should be understood that batteries may be provided for each of the propulsion electric motor 12 and the component electric motor 32.

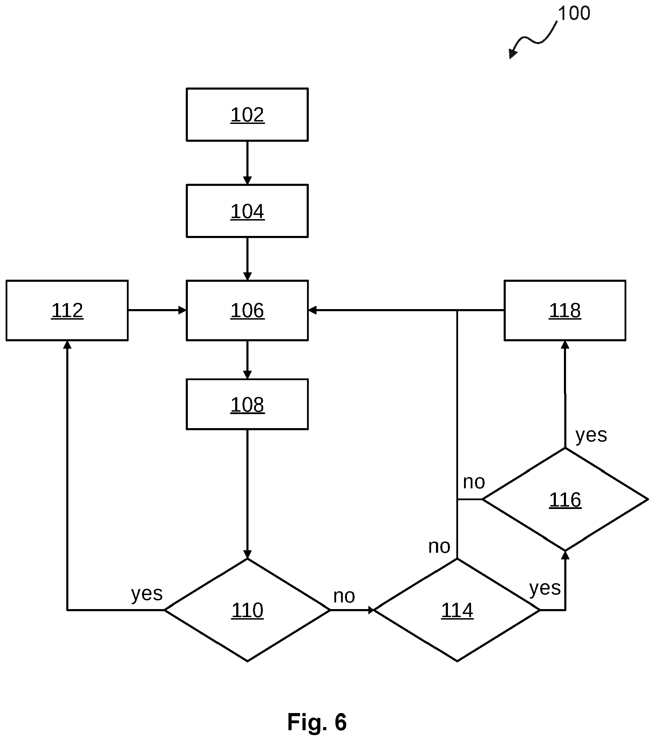

Fig. 6 is a flow chart 100 schematically illustrating the logic of controlling the electric motor, such as the propulsion electric motor 12 or the component electric motor 32, based on the propulsion controller input 18 or the component controller input 38, respectively, as well as the respective propulsion current signal 22 or component current signal 42.

The flow chart 100 illustrates the behaviour of the control circuit 16, as described in relation to the previous figures. In the following example, the blocks of the flow chart 100 will be described in relation to control of the propulsion electric motor 12 based on the propulsion controller input 18 and the propulsion current signal 22. However, the flow chart 100 may similarly apply to corresponding control of the component electric motor 32 based on the component controller input 38 and the component current signal 42.

At block 102, the propulsion controller input is received. The propulsion controller input may be indicative of a state of the propulsion controller between the lower propulsion controller limit and the upper propulsion controller limit.

At block 104, the propulsion variable is determined based on the received propulsion controller input. For example, the propulsion variable may be indicative of a certain speed (rpm) of the propulsion electric motor. The propulsion variable may initially be determined such that a rotational speed of the propulsion electric motor is proportional to the state of the propulsion controller as indicated by the propulsion controller input, e.g. if the propulsion controller is set at 50% between the lower propulsion controller limit and the upper propulsion controller limit, the propulsion variable may initially be determined such that the rotational speed of the propulsion electric motor is at 50% of a defined maximum.

At block 106, the propulsion electric motor is operated in accordance with the propulsion variable. At block 108, the propulsion current signal is received. The propulsion current signal is indicative of the amount of current drawn by the propulsion electric motor, e.g., in the form of a root mean squared signal.

At block 110, it is determined whether the propulsion current signal satisfies the propulsion reduction criteria. If it does not satisfy the propulsion reduction criteria, the procedure continues operating the propulsion electric motor in accordance with the propulsion variable at block 106. If the propulsion current signal does satisfy the propulsion reduction criteria, the procedure continues to block 112, wherein the propulsion variable is reduced by a propulsion reduction amount, e.g., to 50% of the present propulsion variable or by a fixed amount of speed, e.g., 200 rpm. Following the reduction at block 112, the operation of the propulsion electric motor at block 106 is continued with the updated propulsion variable.

Additionally, the procedure may comprise a possibility to increase propulsion variable, when the propulsion current signal does not satisfy the propulsion reduction criteria. As illustrated, when the propulsion current signal does not satisfy the propulsion reduction criteria of block 110, the procedure may continue to block 114 wherein it is determined whether the propulsion variable is below a maximum propulsion variable, i.e., has the propulsion variable previously been reduced and/or does the present propulsion variable correspond to the state of the propulsion controller as indicated by the propulsion controller input received at block 102. If the propulsion variable is not below the maximum propulsion variable, no increase of the propulsion variable is relevant, and the procedure continues operating the propulsion electric motor in accordance with the propulsion variable at block 106. If the propulsion variable is below the maximum propulsion variable, the procedure continues to block 116, wherein it is determined whether the propulsion current signal satisfies the propulsion increasing criteria. If it does not satisfy the propulsion increasing criteria, the procedure continues operating the propulsion electric motor in accordance with the propulsion variable at block 106. If the propulsion current signal does satisfy the propulsion increasing criteria, the procedure continues to block 118, wherein the propulsion variable is increased by a propulsion increase amount, e.g., by 10% of the present propulsion variable or by a fixed amount of speed, e.g., 200 rpm. Following the increasing at block 118, the operation of the propulsion electric motor at block 106 is continued with the updated propulsion variable.

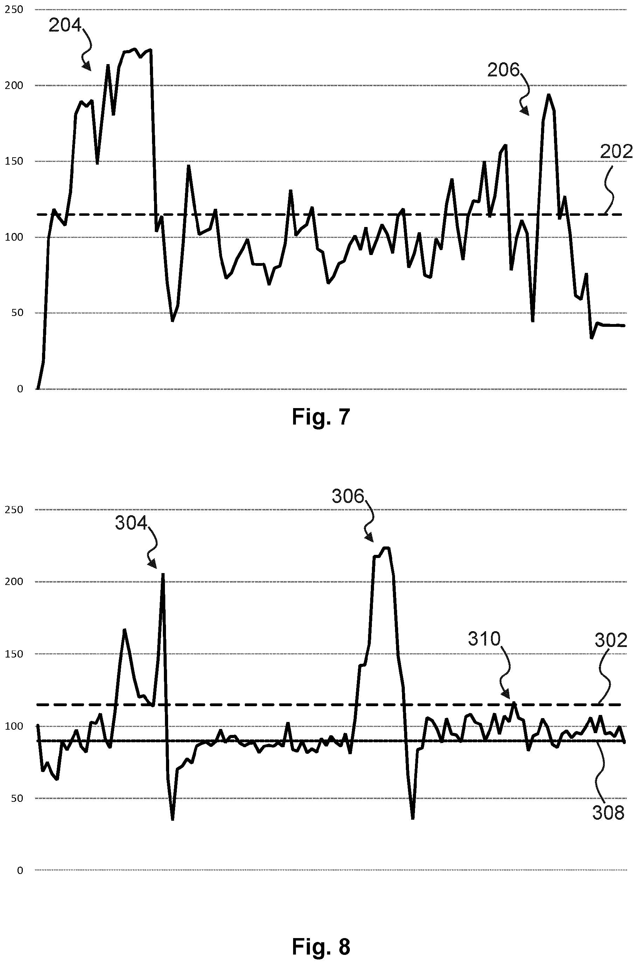

Fig. 7 is an example of current drawn by an electric motor, e.g., a propulsion electric motor, of an exemplary construction machine without implementation of the control of the present disclosure. The horizontal axis shows time, and the vertical axis shows current drawn by the electric motor in ampere. An exemplary upper current threshold of 115 ampere is shown by the line 202. If current above such threshold is drawn for prolonged period of time, the batteries may be damaged. As indicated at 204 and 206, there are some instances with significant periods of time above this limit, even approaching double the limit. This situation might occur at periods of acceleration, passing obstacles, driving uphill or similar, particularly when being loaded close to or above the capacity of the construction machine.

Fig. 8 is an example of current drawn by an electric motor, e.g., a propulsion electric motor, of an exemplary construction machine having implemented the control of the present disclosure. The horizontal axis shows time, and the vertical axis shows current drawn by the electric motor in ampere. An exemplary upper current threshold of 115 ampere is shown by the line 302.

As illustrated at positions 304 and 306, when the current has been above the upper current threshold 302 for a certain amount of time (e.g., 4 seconds), the speed of the electric motor is reduced, e.g. by 700 rpm, causing the current drawn by the electric motor to drop significantly. Thereby, the movement caused by the motor, e.g., propulsion, may be reduced, but movement is still achieved although at a slower pace, and damage to the batteries are prevented or at least reduced.

Also an exemplary lower current threshold of 90 ampere is shown by the line 308. Following a reduction of the speed of the electric motor at positions 304 and 306, the speed is gradually increased, e.g., by 200 rpm, when the current is below the lower current threshold 308. Thus, the speed of the electric motor may be gradually increased to the maximum speed as long as the current drawn by the electric motor is below the lower current threshold 308.

It may importantly be noted that, conversely to simply providing a current limiter, which limits the current to the electric motor to 115 ampere, the presently described control allows short peaks of current to be above the threshold, e.g. as illustrated at position 310, which may act to overcome minor obstacles and provide for a more consistent speed of the construction machine.

The disclosure has been described with reference to a preferred embodiment. However, the scope of the invention is not limited to the illustrated embodiment, and alterations and modifications can be carried out within the scope of the invention as defined in the claims.

Throughout the description, the use of the terms "first", "second", "third", "fourth", "primary", "secondary", "tertiary" etc. does not imply any particular order or importance but are included to identify individual elements. Furthermore, the labelling of a first element does not imply the presence of a second element and vice versa.

### LIST OF REFERENCES

- 2: construction machine
- 4: body
- 6: movement element
- 8: control panel
- 10: propulsion controller
- 12: propulsion electric motor
- 14: battery
- 16: control circuit
- 18: propulsion controller input
- 20: propulsion variable
- 22: propulsion current signal
- 24: current limiter
- 26: gear
- 27: axle
- 28: functional component
- 30: component controller
- 32: component electric motor
- 38: component controller input
- 40: component movement variable
- 42: component current signal
- 44: current limiter

## Claims

1. A construction machine (2) having a body, and one or more movement elements (6), the construction machine further comprising:
- a propulsion electric motor (12) adapted to drive the one or more movement elements,
- one or more batteries (14) adapted to power the propulsion electric motor,
- a control circuit (16) adapted to operate the propulsion electric motor in accordance with a propulsion variable (20), the propulsion variable being indicative of a wanted rotational speed of the propulsion electric motor,
wherein, while operating the propulsion electric motor in accordance with the propulsion variable, the control circuit is further adapted to:
- receive a propulsion current signal (22) indicative of an amount of current drawn by the propulsion electric motor, and
- in accordance with the propulsion current signal satisfying propulsion reduction criteria, reduce the propulsion variable by a propulsion reduction amount such that the propulsion variable is below a maximum propulsion variable.

2. Construction machine according to claim 1, wherein the propulsion reduction criteria include an upper propulsion current threshold and an upper propulsion threshold duration of time, and wherein, to satisfy the propulsion reduction criteria, the propulsion current signal is indicative of the propulsion electric motor having drawn an amount of current above the upper propulsion current threshold for a period of time longer than the upper propulsion threshold duration of time.

3. Construction machine according to claim 2, wherein the upper propulsion threshold duration of time is between 1 and 10 seconds, such as between 3 and 8 seconds, such as between 4 and 6 seconds, such as 5 seconds.

4. Construction machine according to any one of the preceding claims, wherein the propulsion reduction amount is between 30-60%, such as between 40-55%, such as 50% of the propulsion variable and/or of the maximum propulsion variable.

5. Construction machine according to any one of the preceding claims, wherein, while operating the propulsion electric motor in accordance with the propulsion variable and while the propulsion variable is below the maximum propulsion variable, the control circuit is further adapted to, in accordance with the propulsion current signal satisfying a propulsion increasing criteria, increase the propulsion variable by a propulsion increase amount.

6. Construction machine according to claim 5, wherein the propulsion increasing criteria include a lower propulsion current threshold and a lower propulsion threshold duration of time, and wherein, to satisfy the propulsion increasing criteria, the propulsion current signal is indicative of the propulsion electric motor having drawn an amount of current below the lower propulsion current threshold for a period of time longer than the lower propulsion threshold duration of time.

7. Construction machine according to claim 6 as dependent on at least claim 2, wherein the lower propulsion current threshold is lower than the upper propulsion current threshold and/or wherein the lower propulsion threshold duration of time is lower than the upper propulsion threshold duration of time and/or wherein the propulsion increase amount is less than the propulsion reduction amount.

8. Construction machine according to any one of claims 5-7, wherein the propulsion increase amount is between 5-40%, such as between 10-20%, such as 25% of the propulsion variable and/or of the maximum propulsion variable.

9. Construction machine according to any one of the preceding claims comprising a control panel comprising a propulsion controller operable between a lower propulsion controller limit and an upper propulsion controller limit, wherein the control circuit is adapted to receive a propulsion controller input indicative of a state of the propulsion controller between the lower propulsion controller limit and the upper propulsion controller limit, and wherein the propulsion variable is based on the propulsion controller input.

10. Construction machine according to any of the preceding claims, wherein a maximum propulsion speed of the construction machine caused by the one or more movement elements is less than 50 km/h, such as less than 25 km/h, such as less than 10 km/h, such as 6 km/h.

11. Construction machine according to any of the preceding claims, wherein the one or more batteries are lithium-ion batteries.

12. Construction machine according to any one of the preceding claims as dependent on at least claim 2, wherein a current limiter is arranged to limit current to the propulsion electric motor by a maximum current limit specific to the current limiter, and wherein the maximum current limit is more than the upper propulsion current threshold of the propulsion reduction criteria, such as more than 150% of the upper propulsion current threshold, such as more than 200% of the upper propulsion current threshold.

13. Construction machine according to any one of the preceding claims, wherein a rotor of the propulsion electric motor is connected to an axle of the one or more movement elements by a gear with a gear ratio, wherein the gear ratio may be between 2:1-20:1, such as between 4:1-15:1, such as between 5:1-10:1, such as 8:1.

14. Construction machine according to any one of the preceding claims comprising a functional component, such as a skip, movable between a first component position and a second component position, wherein the construction machine comprises a component electric motor adapted to move the functional component between the first component position and the second component position, the control circuit being adapted to operate the component electric motor in accordance with a component movement variable,
wherein, while operating the component electric motor in accordance with the component movement variable, the control circuit is further adapted to:
- receive a component current signal indicative of an amount of current drawn by the component electric motor, and
- in accordance with the component current signal satisfying component reduction criteria, reduce the component movement variable by a component reduction amount, such that the component movement variable is below a maximum component movement variable.

15. A construction machine (2) having a body and a functional component movable between a first component position and a second component position, the construction machine further comprising:
- a component electric motor (32) adapted to move the functional component between the first component position and the second component position,
- one or more batteries (14) adapted to power the component electric motor,
- a control circuit (16) adapted to operate the component electric motor in accordance with a component movement variable (40), the component movement variable being indicative of a wanted speed of the component electric motor,
wherein, while operating the component electric motor in accordance with the component movement variable, the control circuit is further adapted to:
- receive a component current signal (42) indicative of an amount of current drawn by the component electric motor, and
- in accordance with the component current signal satisfying component reduction criteria, reduce the component movement variable by a component reduction amount such that the component movement variable is below a maximum component movement variable.

## Patentansprüche

1. Baumaschine (2), die einen Körper und ein oder mehrere Bewegungselemente (6) aufweist, wobei die Baumaschine weiter umfasst:
- einen elektrischen Antriebsmotor (12), der angepasst ist, um das eine oder die mehreren Bewegungselemente anzutreiben,
- eine oder mehrere Batterien (14), die angepasst sind, um den elektrischen Antriebsmotor mit Energie zu versorgen,
- eine Steuerschaltung (16), die angepasst ist, um den elektrischen Antriebsmotor in Übereinstimmung mit einer Antriebsvariablen (20) zu betreiben, wobei die Antriebsvariable eine gewünschte Drehgeschwindigkeit des elektrischen Antriebsmotors angibt,
wobei die Steuerschaltung während des Betriebs des elektrischen Antriebsmotors in Übereinstimmung mit der Antriebsvariablen weiter angepasst ist zum:
- Empfangen eines Antriebsstromsignals (22), das eine Strommenge angibt, die von dem elektrischen Antriebsmotor aufgenommen wird, und
- in Übereinstimmung damit, dass das Antriebsstromsignal Antriebsreduktionskriterien erfüllt, Reduzieren der Antriebsvariablen um einen Antriebsreduktionsbetrag, so dass die Antriebsvariable unter einer maximalen Antriebsvariablen liegt.

2. Baumaschine nach Anspruch 1, wobei die Antriebsreduktionskriterien einen oberen Antriebsstromschwellenwert und eine obere Antriebsschwellenwert-Zeitdauer einschließen, und wobei, um die Antriebsreduktionskriterien zu erfüllen, das Antriebsstromsignal angibt, dass der elektrische Antriebsmotor eine Strommenge über dem oberen Antriebsstromschwellenwert für eine Zeitdauer aufgenommen hat, die länger als die obere Antriebsschwellenwert-Zeitdauer ist.

3. Baumaschine nach Anspruch 2, wobei die obere Antriebsschwellenwert-Zeitdauer zwischen 1 und 10 Sekunden, wie beispielsweise zwischen 3 und 8 Sekunden, wie beispielsweise zwischen 4 und 6 Sekunden, wie beispielsweise 5 Sekunden, beträgt.

4. Baumaschine nach einem der vorstehenden Ansprüche, wobei der Antriebsreduktionsbetrag zwischen 30-60 %, wie beispielsweise zwischen 40-55 %, wie beispielsweise 50 % der Antriebsvariablen und/oder der maximalen Antriebsvariablen beträgt.

5. Baumaschine nach einem der vorstehenden Ansprüche, wobei während eines Betriebs des elektrischen Antriebsmotors in Übereinstimmung mit der Antriebsvariablen und während die Antriebsvariable unter der maximalen Antriebsvariablen liegt, die Steuerschaltung weiter angepasst ist, um in Übereinstimmung mit dem Antriebsstromsignal, das ein Antriebserhöhungskriterium erfüllt, die Antriebsvariable um einen Antriebserhöhungsbetrag zu erhöhen.

6. Baumaschine nach Anspruch 5, wobei die Antriebserhöhungskriterien einen unteren Antriebsstromschwellenwert und eine untere Antriebsschwellenwert-Zeitdauer einschließen, und wobei, um die Antriebserhöhungskriterien zu erfüllen, das Antriebsstromsignal angibt, dass der elektrische Antriebsmotor eine Strommenge unterhalb des unteren Antriebsstromschwellenwerts für eine längere Zeitdauer als die untere Antriebsschwellenwert-Zeitdauer aufgenommen hat.

7. Baumaschine nach Anspruch 6 in Abhängigkeit von mindestens Anspruch 2, wobei der untere Antriebsstromschwellenwert niedriger ist als der obere Antriebsstromschwellenwert und/oder wobei die untere Antriebsschwellenwert-Zeitdauer niedriger ist als die obere Antriebsschwellenwert-Zeitdauer und/oder wobei der Antriebserhöhungsbetrag geringer ist als der Antriebsreduktionsbetrag.

8. Baumaschine nach einem der Ansprüche 5 - 7, wobei der Antriebserhöhungsbetrag zwischen 5 - 40 %, wie beispielsweise zwischen 10 - 20 %, wie beispielsweise 25 % der Antriebsvariablen und/oder der maximalen Antriebsvariablen beträgt.

9. Baumaschine nach einem der vorstehenden Ansprüche, umfassend eine Steuertafel, die eine Antriebssteuereinheit umfasst, die zwischen einer unteren Antriebssteuereinheitsgrenze und einer oberen Antriebssteuereinheitsgrenze betrieben werden kann, wobei die Steuerschaltung angepasst ist, um eine Antriebssteuereinheitseingabe zu empfangen, die einen Zustand der Antriebssteuereinheit zwischen der unteren Antriebssteuereinheitsgrenze und der oberen Antriebssteuereinheitsgrenze angibt, und wobei die Antriebsvariable auf der Antriebssteuereinheitseingabe basiert.

10. Baumaschine nach einem der vorstehenden Ansprüche, wobei eine maximale Antriebsgeschwindigkeit der Baumaschine, die durch das eine oder die mehreren Bewegungselemente verursacht wird, weniger als 50 km/h, wie beispielsweise weniger als 25 km/h, wie beispielsweise weniger als 10 km/h, wie beispielsweise 6 km/h beträgt.

11. Baumaschine nach einem der vorstehenden Ansprüche, wobei es sich bei der einen oder den mehreren Batterien um Lithium-Ionen-Batterien handelt.

12. Baumaschine nach einem der vorstehenden Ansprüche in Abhängigkeit von mindestens Anspruch 2, wobei ein Strombegrenzer so angeordnet ist, dass er den Strom zu dem elektrischen Antriebsmotor durch eine für den Strombegrenzer spezifische maximale Stromgrenze begrenzt, und wobei die maximale Stromgrenze mehr als der obere Antriebsstromschwellenwert der Antriebsreduktionskriterien ist, wie beispielsweise mehr als 150 % des oberen Antriebsstromschwellenwerts, wie beispielsweise mehr als 200 % des oberen Antriebsstromschwellenwerts.

13. Baumaschine nach einem der vorstehenden Ansprüche, wobei ein Rotor des elektrischen Antriebsmotors mit einer Achse des einen oder der mehreren Bewegungselemente durch ein Getriebe mit einer Getriebeübersetzung verbunden ist, wobei die Getriebeübersetzung zwischen 2:1-20:1, wie beispielsweise zwischen 4:1-15:1, wie beispielsweise zwischen 5:1-10:1, wie beispielsweise 8:1 betragen kann.

14. Baumaschine nach einem der vorstehenden Ansprüche umfassend eine Funktionskomponente, wie beispielsweise eine Mulde, die zwischen einer ersten Komponentenposition und einer zweiten Komponentenposition beweglich ist, wobei die Baumaschine einen Komponentenelektromotor umfasst, der angepasst ist, um die Funktionskomponente zwischen der ersten Komponentenposition und der zweiten Komponentenposition zu bewegen, wobei die Steuerschaltung angepasst ist, um den Komponenten-Elektromotor in Übereinstimmung mit einer Komponentenbewegungsvariablen zu betreiben,
wobei die Steuerschaltung während des Betriebs des Komponenten-Elektromotors in Übereinstimmung mit der Komponentenbewegungsvariablen weiter angepasst ist zum:
- Empfangen eines Komponentenstromsignals, das eine Strommenge angibt, die von dem Komponenten-Elektromotor aufgenommen wird, und
- in Übereinstimmung damit, dass das Komponentenstromsignal Komponentenreduktionskriterien erfüllt, Reduzieren der Komponentenbewegungsvariable um einen Komponentenreduktionsbetrag, so dass die Komponentenbewegungsvariable unter einer maximalen Komponentenbewegungsvariable liegt.

15. Baumaschine (2), die einen Körper und eine Funktionskomponente, die zwischen einer ersten Komponentenposition und einer zweiten Komponentenposition beweglich ist, aufweist,
wobei die Baumaschine weiter umfasst:
- einen Komponenten-Elektromotor (32), der angepasst ist, um die Funktionskomponente zwischen der ersten Komponentenposition und der zweiten Komponentenposition zu bewegen,
- eine oder mehrere Batterien (14), die angepasst sind, um den Komponenten-Elektromotor mit Energie zu versorgen,
- eine Steuerschaltung (16), die angepasst ist, um den Komponenten-Elektromotor in Übereinstimmung mit einer Komponentenbewegungsvariablen (40) zu betreiben, wobei die Komponentenbewegungsvariable eine gewünschte Geschwindigkeit des Komponenten-Elektromotors angibt,
wobei die Steuerschaltung während des Betriebs des Komponenten-Elektromotors in Übereinstimmung mit der Komponentenbewegungsvariablen weiter angepasst ist zum:
- Empfangen eines Komponentenstromsignals (42), das eine Strommenge angibt, die von dem Komponenten-Elektromotor aufgenommen wird, und
- in Übereinstimmung damit, dass das Komponentenstromsignal Komponentenreduktionskriterien erfüllt, Reduzieren der Komponentenbewegungsvariable um einen Komponentenreduktionsbetrag, so dass die Komponentenbewegungsvariable unter einer maximalen Komponentenbewegungsvariable liegt.

## Revendications

1. Machine de construction (2) présentant un corps, et un ou plusieurs éléments de déplacement (6), la machine de construction comprenant en outre :
- un moteur électrique de propulsion (12) conçu pour entraîner les un ou plusieurs éléments de déplacement,
- une ou plusieurs batteries (14) conçues pour alimenter le moteur électrique de propulsion,
- un circuit de commande (16) conçu pour faire fonctionner le moteur électrique de propulsion selon une variable de propulsion (20), la variable de propulsion étant indicative d'une vitesse de rotation souhaitée du moteur électrique de propulsion,
dans laquelle, tout en faisant fonctionner le moteur électrique de propulsion conformément à la variable de propulsion, le circuit de commande est en outre conçu pour :
- recevoir un signal (22) de courant de propulsion indiquant une quantité de courant consommé par le moteur électrique de propulsion, et
- si le signal de courant de propulsion satisfait des critères de réduction de propulsion, réduire la variable de propulsion d'une quantité de réduction de propulsion de telle sorte que la variable de propulsion est au-dessous d'une variable de propulsion maximale.

2. Machine de construction selon la revendication 1, dans laquelle les critères de réduction de propulsion incluent un seuil de courant de propulsion supérieur et une durée seuil de propulsion supérieure dans le temps, et dans laquelle, pour satisfaire les critères de réduction de propulsion, le signal de courant de propulsion indique que le moteur électrique de propulsion a consommé une quantité de courant au-dessus du seuil de courant de propulsion supérieur pendant une période dans le temps plus longue que la durée seuil de propulsion supérieure dans le temps.

3. Machine de construction selon la revendication 2, dans laquelle la durée seuil de propulsion supérieure dans le temps est entre 1 et 10 secondes, telle qu'entre 3 et 8 secondes, telle qu'entre 4 et 6 secondes, telle que 5 secondes.

4. Machine de construction selon l'une quelconque des revendications précédentes, dans laquelle la quantité de réduction de propulsion est entre 30-60 %, telle qu'entre 40-55 %, telle que 50 % de la variable de propulsion et/ou de la variable de propulsion maximale.

5. Machine de construction selon l'une quelconque des revendications précédentes, dans laquelle, tout en faisant fonctionner le moteur électrique de propulsion conformément à la variable de propulsion et tandis que la variable de propulsion est au-dessous de la variable de propulsion maximale, le circuit de commande est en outre conçu pour, conformément au signal de courant de propulsion satisfaisant un critère d'augmentation de propulsion, augmenter la variable de propulsion d'une quantité d'augmentation de propulsion.

6. Machine de construction selon la revendication 5, dans laquelle les critères d'augmentation de propulsion incluent un seuil de courant de propulsion inférieur et une durée seuil de propulsion inférieure dans le temps, et dans laquelle, pour satisfaire les critères d'augmentation de propulsion, le signal de courant de propulsion indique que le moteur électrique de propulsion a consommé une quantité de courant au-dessous du seuil de courant de propulsion inférieur pendant une période dans le temps plus longue que la durée seuil de propulsion inférieure dans le temps.

7. Machine de construction selon la revendication 6 lorsqu'elle dépend au moins de la revendication 2, dans laquelle le seuil de courant de propulsion inférieur est inférieur au seuil de courant de propulsion supérieur et/ou dans laquelle la durée seuil de propulsion inférieure dans le temps est inférieure à la durée seuil de propulsion supérieure dans le temps et/ou dans laquelle la quantité d'augmentation de propulsion est inférieure à la quantité de réduction de propulsion.

8. Machine de construction selon l'une quelconque des revendications 5 à 7, dans laquelle la quantité d'augmentation de propulsion est entre 5-40 %, telle qu'entre 10-20 %, telle que 25 % de la variable de propulsion et/ou de la variable de propulsion maximale.

9. Machine de construction selon l'une quelconque des revendications précédentes comprenant un panneau de commande comprenant un dispositif de commande de propulsion pouvant fonctionner entre une limite de dispositif de commande de propulsion inférieure et une limite de dispositif de commande de propulsion supérieure, dans laquelle le circuit de commande est conçu pour recevoir une entrée de dispositif de commande de propulsion indiquant un état du dispositif de commande de propulsion entre la limite de dispositif de commande de propulsion inférieure et la limite de dispositif de commande de propulsion supérieure, et dans laquelle la variable de propulsion est basée sur l'entrée de dispositif de commande de propulsion.

10. Machine de construction selon l'une quelconque des revendications précédentes, dans laquelle une vitesse de propulsion maximale de la machine de construction causée par les un ou plusieurs éléments de déplacement est inférieure à 50 km/h, telle qu'inférieure à 25 km/h, telle qu'inférieure à 10 km/h, telle que 6 km/h.

11. Machine de construction selon l'une quelconque des revendications précédentes, dans laquelle les une ou plusieurs batteries sont des batteries au lithium-ion.

12. Machine de construction selon l'une quelconque des revendications précédentes lorsqu'elle dépend au moins de la revendication 2, dans laquelle un limiteur de courant est agencé pour limiter le courant vers le moteur électrique de propulsion par une limite de courant maximale spécifique au limiteur de courant, et dans laquelle la limite de courant maximale est supérieure au seuil de courant de propulsion supérieur des critères de réduction de propulsion, telle que supérieure à 150 % du seuil de courant de propulsion supérieur, telle que supérieure à 200 % du seuil de courant de propulsion supérieur.

13. Machine de construction selon l'une quelconque des revendications précédentes, dans laquelle un rotor du moteur électrique de propulsion est relié à un essieu des un ou plusieurs éléments de déplacement par un engrenage avec un rapport d'engrenage, dans laquelle le rapport d'engrenage peut être entre 2:1-20:1, tel qu'entre 4:1-15:1, tel qu'entre 5:1-10:1, tel que 8:1.

14. Machine de construction selon l'une quelconque des revendications précédentes comprenant un composant fonctionnel, tel qu'une benne, mobile entre une première position de composant et une seconde position de composant, dans laquelle la machine de construction comprend un moteur électrique de composant conçu pour déplacer le composant fonctionnel entre la première position de composant et la seconde position de composant, le circuit de commande étant conçu pour faire fonctionner le moteur électrique de composant conformément à une variable de déplacement de composant,
dans laquelle, tout en faisant fonctionner le moteur électrique de composant conformément à la variable de déplacement de composant, le circuit de commande est en outre conçu pour :
- recevoir un signal de courant de composant indiquant une quantité de courant consommé par le moteur électrique de composant, et
- conformément au signal de courant de composant satisfaisant des critères de réduction de composant, réduire la variable de déplacement de composant d'une quantité de réduction de composant, de telle sorte que la variable de déplacement de composant est au-dessous d'une variable de déplacement de composant maximale.

15. Machine de construction (2) présentant un corps et un composant fonctionnel mobile entre une première position de composant et une seconde position de composant,
la machine de construction comprenant en outre :
- un moteur électrique (32) de composant conçu pour déplacer le composant fonctionnel entre la première position de composant et la seconde position de composant,
- une ou plusieurs batteries (14) conçues pour alimenter le moteur électrique de composant,
- un circuit de commande (16) conçu pour faire fonctionner le moteur électrique de composant selon une variable (40) de déplacement de composant, la variable de déplacement de composant étant indicative d'une vitesse souhaitée du moteur électrique de composant, dans laquelle, tout en faisant fonctionner le moteur électrique de composant conformément à la variable de déplacement de composant, le circuit de commande est en outre conçu pour :
- recevoir un signal (42) de courant de composant indiquant une quantité de courant consommé par le moteur électrique de composant, et
- conformément au signal de courant de composant satisfaisant des critères de réduction de composant, réduire la variable de déplacement de composant d'une quantité de réduction de composant de telle sorte que la variable de déplacement de composant est au-dessous d'une variable de déplacement de composant maximale.
